# FASCICULE DE BREVET EUROPEEN

(11) **EP 2 643 406 B1**
(45) Date de publication et mention de la délivrance du brevet: **18.03.2015**
(21) Numéro de dépôt: 11785442.2
(22) Date de dépôt: 23.11.2011
(51) Int. Cl.: C08L 15/00, C08C 19/44, C08C 19/26

(54) **ELASTOMÈRE DIÉNIQUE À IP FAIBLE FONCTIONNEL À FLUAGE À FROID AMÉLIORÉ ET COMPOSITION DE CAOUTCHOUC LE CONTENANT**
FUNKTIONELLES DIENELASTOMER MIT NIEDRIGEM PI UND VERBESSERTER KÄLTEFLIESSFÄHIGKEIT SOWIE DIESES ENTHALTENDE KAUTSCHUKZUSAMMENSETZUNG
FUNCTIONAL DIENE ELASTOMER WITH A LOW PI AND IMPROVED COLD FLOW, AND RUBBER COMPOSITION CONTAINING SAME

(30) Priorité: 23.11.2010 FR 1059641
(43) Date de publication de la demande: 02.10.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ABAD, Mathilde, F-63040 Clermont-ferrand Cedex 09 (FR); DORATO, Margarita, F-63040 Clermont-ferrand Cedex 09 (FR); FAVROT, Jean-Michel, F-63040 Clermont-ferrand Cedex 09 (FR); SIMON, Nathalie, F-63040 Clermont-ferrand Cedex 09 (FR); MARECHAL, Jean Marc, F-63040 Clermont-ferrand Cedex 09 (FR); DE LANDTSHEER, Stéphanie, F-63040 Clermont-ferrand Cedex 09 (FR)
(74) Mandataire: Le Cam, Véronique Marie Christine
(86) Numéro de dépôt international: PCT/EP2011/070742
(87) Numéro de publication internationale: WO 2012/069506

(56) Documents cités:
- EP-A1- 0 647 675
- EP-A1- 1 577 339
- US-A- 5 248 722

## Description

La présente invention se rapporte à un élastomère diénique fonctionnalisé composé d'un élastomère diénique fonctionnalisé spécifique et d'un élastomère diénique étoilé spécifique.

La réduction de l'hystérèse des mélanges est un objectif permanent de l'industrie du pneumatique afin de limiter la consommation d'essence et de préserver ainsi l'environnement. Cette réduction d'hystérèse doit toutefois se faire en conservant intacte, voire en améliorant l'aptitude à la mise en oeuvre des mélanges.

Pour atteindre l'objectif de baisse d'hystérèse, de nombreuses solutions ont déjà été expérimentées. En particulier, la fonctionnalisation des polymères par une fonction interactive avec la charge renforçante est apparue comme une voie intéressante.

Des fonctions interactives avec la charge ont ainsi été adjointes en extrémité de chaîne en début ou fin de polymérisation au moyen d'amorceurs fonctionnels ou d'agents de fonctionnalisation. A titre d'exemple, la 4,4'-bis-(diéthylaminobenzophénone), encore appelée DEAB, ou d'autres fonctions aminées qui interagissent avec le noir de carbone ont été adjointes en fin de polymérisation comme décrit dans les documents de brevet FR2526030 et US4848511. Les polymères couplés ou étoilés à l'étain contiennent des fonctions susceptibles d'interagir avec le noir de carbone introduites en fin de polymérisation. A titre d'exemple, on peut citer le document de brevet européen EP0709235. Des fonctions interagissant avec la silice ont également été adjointes en extrémité de chaîne en fin de polymérisation, telles que des fonctions contenant un groupe silanol divulguées dans le document de brevet FR2740778 ou des fonctions contenant des groupes alkoxysilane ou aryloxysilane décrits dans le document US5066721. La plupart de ces solutions, tant pour le noir que pour la silice, conduit réellement à une limitation d'hystérèse des compositions correspondantes mais concomitamment à une plus grande difficulté de mise en oeuvre de ces mêmes compositions.

Il est également connu que les polymères à distributions moléculaires étroites confèrent aux compositions de caoutchouc les contenant une hystérèse réduite. En particulier, les élastomères diéniques fonctionnels linéaires avec des distributions moléculaires étroites avant fonctionnalisation présentent des propriétés hystérétiques améliorées. Cependant, ces élastomères présentent un fluage à froid accru par rapport aux mêmes élastomères présentant une distribution moléculaire large avant fonctionnalisation, ce qui est pénalisant pour le stockage et le transport des élastomères.

Afin de diminuer le fluage à froid, de nombreuses solutions existent. L'ouvrage « Nouvelles Recherches dans le Domaine des Composés Macromoléculaires Editor(s): Ceausescu E Oxford, Pergamon Press Ltd., 1984, p.343-56. 72 » cite des méthodes de réduction du fluage à froid telles que l'augmentation de la masse moléculaire, l'étoilage ou le degré de branchement. Mais l'augmentation de la masse moléculaire pénalise fortement la mise en oeuvre des mélanges alors que le branchement s'accompagne d'une augmentation de l'hystérèse des mélanges. Par ailleurs, étonnamment, les polymères uniquement étoilés étain (3 ou 4 branches) sont davantage hystérétiques comparativement aux polymères couplés étain.

Pour résoudre le problème de fluage à froid, il est également connu que l'indice de polydispersité de l'élastomère peut être augmenté. Toutefois, cela n'est pas sans effet sur les propriétés des compositions de caoutchouc le contenant, en particulier sur l'hystérèse ou la facilité de mise en oeuvre des mélanges par exemple.

Le brevet EP0924227 décrit un copolymère d'une dioléfine conjuguée et d'un composé vinylaromatique contenant une fonction amine dans la chaîne polymère et présentant une distribution moléculaire polymodale. Ce brevet décrit deux procédés d'obtention dudit polymère à distribution moléculaire spécifique qui génèrent une quantité de chaînes non fonctionnelles.

Il existe donc un besoin de fournir un élastomère qui confère à une composition de caoutchouc renforcée de bonnes propriétés d'hystérèse et de mise en oeuvre en vue d'une application en pneumatique, tout en présentant un fluage à froid réduit dans l'optique d'une meilleure tenue lors du stockage et du transport du caoutchouc.

La demanderesse a découvert de façon surprenante qu'un élastomère diénique fonctionnalisé composé d'un élastomère diénique fonctionnalisé en extrémité de chaîne ou en milieu de chaîne par une fonction étain, présentant une distribution de masse moléculaire étroite avant fonctionnalisation, et d'un élastomère diénique étoilé avec un composé contenant de l'étain, présentant une distribution de masse moléculaire étroite avant étoilage et contenant moins de 15% en poids par rapport au poids total de l'élastomère diénique fonctionnalisé d'élastomère diénique non fonctionnel étain confère à une composition de caoutchouc le contenant des propriétés de caoutchouterie, et en particulier les propriétés hystérétiques et de mise en oeuvre, tout à fait acceptables pour une utilisation en pneumatique, tout en présentant une résistance au fluage à froid significativement améliorée.

L'invention a donc pour objet un élastomère diénique fonctionnalisé composé :
a) d'un élastomère diénique fonctionnalisé en extrémité de chaîne ou en milieu de chaîne par une fonction étain, présentant une distribution de masses moléculaires monomodale avant fonctionnalisation et un indice de polydispersité avant fonctionnalisation ou couplage inférieur ou égal à 1,3,
b) d'un élastomère diénique étoilé avec un composé contenant de l'étain, présentant une distribution de masses moléculaires monomodale avant étoilage et un indice de polydispersité avant étoilage inférieur ou égal à 1,3, et
c) d'un taux inférieur à 15% en poids par rapport au poids total de l'élastomère diénique fonctionnalisé d'un élastomère diénique non fonctionnel étain.

Selon l'invention les élastomères diéniques a), b) et c) sont avant fonctionnalisation éventuelle ou étoilage éventuel de même nature.

A titre préférentiel, l'élastomère diénique fonctionnalisé selon l'invention comprend de 5% à 45% en poids, préférentiellement de 10% à 30% en poids par rapport au poids total de l'élastomère diénique fonctionnalisé dudit élastomère diénique étoilé b).

De préférence, l'élastomère diénique fonctionnalisé selon l'invention comprend un taux strictement supérieur à 0% en poids et inférieur à 10% en poids, et plus préférentiellement un taux inférieur à 5% en poids par rapport au poids total de l'élastomère diénique fonctionnalisé dudit élastomère non fonctionnel étain c).

Dans la présente description, on entend par élastomère diénique fonctionnalisé un élastomère diénique qui comporte un groupement comprenant un ou plusieurs hétéroatomes.

Ce groupement peut se situer en bout de chaîne. On dira alors que l'élastomère diénique est fonctionnalisé en bout de chaîne. C'est généralement un élastomère obtenu par réaction d'un élastomère vivant sur un agent de fonctionnalisation, c'est à dire toute molécule au moins monofonctionnelle, la fonction étant tout type de groupement chimique connu par l'homme de l'art pour réagir avec un bout de chaîne vivant.

Ce groupement peut se situer dans la chaîne élastomère principale linéaire. On dira alors que l'élastomère diénique est couplé ou encore fonctionnalisé en milieu de chaîne, par opposition à la position "en bout de chaîne" et bien que le groupement ne se situe pas précisément au milieu de la chaîne élastomère. C'est généralement un élastomère obtenu par réaction d'un élastomère vivant sur un agent de couplage, c'est à dire toute molécule au moins difonctionnelle, la fonction étant tout type de groupement chimique connu par l'homme de l'art pour réagir avec un bout de chaîne vivant.

Ce groupement peut être central auquel n chaînes ou branches élastomères (n>2) sont liées formant une structure en étoile de l'élastomère. On dira alors que l'élastomère diénique est étoilé. C'est généralement un élastomère obtenu par réaction d'un élastomère vivant sur un agent d'étoilage, c'est à dire toute molécule multifonctionnelle, la fonction étant tout type de groupement chimique connu par l'homme de l'art pour réagir avec un bout de chaîne vivant.

Comme expliqué précédemment, l'élastomère diénique a) est fonctionnalisé en extrémité ou en milieu de chaîne par une fonction étain. La fonctionnalisation peut être obtenue avec un agent de fonctionnalisation mono-halogénoétain ou de couplage di-halogénoétain pouvant répondre à la formule générale R₄₋ₓSnX⁰ₓ, où x représente un entier de valeur 1 ou 2, R représente un radical alkyle, cycloalkyle, aryle, alkaryle ou vinyle ayant de 1 à 12 atomes de carbone, de préférence un butyle, et X⁰ est un atome d'halogène, de préférence le chlore. A titre d'agent de fonctionnalisation préféré, on peut citer le monochlorure de tributyl étain ou le dichlorure de dibutyl étain. De la même manière, la fonctionnalisation peut être obtenue avec un agent de fonctionnalisation dérivé de l'étain pouvant répondre à la formule générale (X¹_{y}R¹_{3-y}Sn)-O-(SnR¹_{3-z}X¹_{z}) ou (X¹_{y}R¹_{3-y}Sn)-O-(CH2)ₑ-O-(SnR¹_{3-z}X¹_{z}), où y et z représentent des entiers compris entre 0 et 2 et y+z égal à 1 ou 2, R¹ représente un radical alkyle, cycloalkyle, aryle, alkaryle ou vinyle ayant de 1 à 12 atomes de carbone, de préférence un butyle, X¹ est un atome d'halogène, de préférence le chlore, et e représente un entier de 1 à 20, de préférence 4.

Selon l'invention, l'élastomère diénique b) est étoilé par une fonction étain. L'étoilage peut être obtenu avec un agent d'étoilage tri ou tétra-halogénoétain pouvant répondre à la formule générale R²_{q}SnX²_{4-q}, où q représente un entier de valeur 0 ou 1, R² représente un radical alkyle, cycloalkyle, aryle, alkaryle ou vinyle ayant de 1 à 12 atomes de carbone, de préférence un butyle, et X² est un atome d'halogène, de préférence le chlore. A titre d'agent d'étoilage préféré, on peut citer le trichlorure de butyl étain ou le tétrachlorure d'étain. De la même manière, l'étoilage peut être obtenu avec un agent de fonctionnalisation dérivé de l'étain pouvant répondre à la formule générale (X³ₖR³₃₋ₖSn)-O-(SnR³₃₋ₗX³ₗ) ou (X³ₖR³₃₋ₖSn)-O-(CH2)_{f}-O-(SnR³₃₋ₗX³ₗ), où k et 1 représentent des entiers compris entre 0 et 3, k+1 compris entre 3 et 6, R³ représente un radical alkyle, cycloalkyle, aryle, alkaryle ou vinyle ayant de 1 à 12 atomes de carbone, de préférence un butyle, X³ est un atome d'halogène, de préférence le chlore et f représente un entier de valeur de 1 à 20, de préférence 4.

Selon un mode de réalisation préféré, l'élastomère diénique a) est un élastomère diénique fonctionnalisé par une fonction étain en milieu de chaîne.

Selon un autre mode de réalisation préféré, l'élastomère diénique b) est un élastomère diénique étoilé étain à 4 branches.

Selon un autre mode de réalisation préféré, l'élastomère diénique a) est un élastomère diénique fonctionnalisé par une fonction étain en milieu de chaîne et l'élastomère diénique b) est un élastomère diénique étoilé étain à 4 branches.

Selon l'invention, l'élastomère diénique c) est non fonctionnel étain. Ledit élastomère peut être obtenu pendant la fonctionnalisation.

Selon l'invention, l'élastomère diénique a) fonctionnalisé en extrémité de chaîne ou en milieu de chaîne par une fonction étain, présente une distribution de masses moléculaires monomodale avant fonctionnalisation et un indice de polydispersité avant fonctionnalisation inférieur ou égal à 1,3.

De même, selon l'invention, l'élastomère diénique étoilé b), présente une distribution de masses moléculaires monomodale avant étoilage et un indice de polydispersité avant étoilage inférieur ou égal à 1,3.

Par indice de polydispersité, on entend au sens de l'invention le rapport masse moléculaire moyenne en poids/masse moléculaire moyenne en nombre.

Par élastomère diénique, on entend selon l'invention tout homopolymère obtenu par polymérisation d'un monomère diène conjugué ayant de 4 à 12 atomes de carbone, ou tout copolymère à bloc, statistique, séquencé ou microséquencé, obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

A titre préférentiel, l'élastomère diénique est choisi parmi les polybutadiènes, les copolymère butadiène-styrène, les copolymères butadiène-styrène-isoprène, les copolymères styrène-isoprène, les copolymères butadiène-isoprène et le polyisoprène de synthèse. Avantageusement, l'élastomère diénique est un copolymère butadiène-styrène.

Conviennent notamment les polybutadiènes ayant une teneur (% molaire) en unités -1,2 comprise entre 4% et 80%, les polyisoprènes, les copolymères de butadiène-styrène et en particulier ceux ayant une Tg (température de transition vitreuse, mesurée selon ASTM D3418) entre 0°C et -80°C et plus particulièrement entre -10°C et -70°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre 0°C et - 55°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans - 1,4 de la partie isoprénique comprise entre 10% et 50%, et plus généralement tout copolymère butadiène-styrène-isoprène ayant une Tg comprise entre 0°C et - 70°C.

L'élastomère diénique a) peut comprendre une fonction amine à l'une ou toutes les extrémités de chaînes non fonctionnalisées étain. De même, l'élastomère diénique b) peut comprendre une fonction amine aux extrémités de chaînes non étoilées étain. De même, l'élastomère diénique non fonctionnel étain c) peut comprendre une fonction amine à l'une des extrémités de chaîne.

La polymérisation de monomères diéniques est amorcée par un initiateur. En tant qu'initiateur de polymérisation, on peut utiliser tout initiateur anionique monofonctionnel connu. Toutefois un initiateur contenant un métal alcalin tel que le lithium est utilisé à titre préférentiel.

En tant qu'initiateur de polymérisation, on peut utiliser tout initiateur anionique monofonctionnel connu. Toutefois un initiateur contenant un métal alcalin tel que le lithium est utilisé à titre préférentiel. Comme initiateurs organolithiens conviennent notamment ceux comportant une liaison carbone-lithium ou azote-lithium. Des composés représentatifs sont les organolithiens aliphatiques tels que l'éthyllithium, le n-butyllithium (n-BuLi), l'isobutyllithium, etc.; les amidures de lithium obtenus à partir d'une amine secondaire et plus particulièrement ceux obtenus à partir d'un amine secondaire cyclique, telle que la pyrrolidine ou l'hexaméthylèneimine, et solubles dans un solvant hydrocarboné sans utilisation d'un agent de solvatation sont hautement préférés.

La polymérisation est, comme connu en soi, de préférence effectuée en présence d'un solvant inerte qui peut être par exemple un hydrocarbure aliphatique ou alicyclique comme le pentane, l'hexane, l'heptane, l'iso-octane, le cyclohexane ou un hydrocarbure aromatique comme le benzène, le toluène, le xylène.

La polymérisation peut être effectuée en continu ou en discontinu. On effectue généralement la polymérisation à une température comprise entre 20°C et 120°C et de préférence voisine de 30°C à 90°C. On peut bien entendu également ajouter en fin de polymérisation un agent de transmétallation pour modifier la réactivité de l'extrémité de chaîne vivante.

L'élastomère diénique vivant issu de la polymérisation est ensuite fonctionnalisé pour préparer l'élastomère diénique.

Selon une première variante de préparation de l'élastomère diénique fonctionnalisé selon l'invention, on mélange l'élastomère diénique a) fonctionnalisé en extrémité de chaîne ou en milieu de chaîne par une fonction étain et l'élastomère diénique étoilé b), dans les proportions appropriées.

L'élastomère diénique a) fonctionnalisé en extrémité de chaîne ou en milieu de chaîne par une fonction étain peut être obtenu de manière connue en soi par réaction d'un dérivé de l'étain sur l'élastomère diénique vivant issu de la polymérisation.

L'élastomère étoilé b) peut être obtenu de manière connue en soi par réaction d'un agent d'étoilage contenant de l'étain sur l'élastomère diénique vivant issu de la polymérisation.

Le mélangeage des deux élastomères peut s'effectuer dans un solvant inerte, par exemple un hydrocarbure aliphatique ou alicyclique comme le pentane, l'hexane, l'heptane, l'iso-octane, le cyclohexane ou un hydrocarbure aromatique comme le benzène, le toluène, le xylène, qui peut être le même que le solvant de polymérisation. Le mélangeage est alors effectué à une température de préférence comprise entre 20°C et 120°C, de préférence voisine de 30°C à 90°C.

Selon une deuxième variante de préparation de l'élastomère diénique fonctionnalisé selon l'invention, l'élastomère diénique vivant issu de l'étape de polymérisation est soumis à la réaction d'un agent de fonctionnalisation et à celle d'un agent d'étoilage.

Ainsi, par exemple, la fonctionnalisation de l'élastomère diénique vivant issu de l'étape de polymérisation peut s'effectuer à une température variant de 30 à 120°C, en présence dans un premier temps d'une quantité appropriée d'un agent d'étoilage pour étoiler de 5 à 45% en poids de l'élastomère vivant préférentiellement. Puis, dans un deuxième temps, les chaînes vivantes restantes de l'élastomère diénique obtenu après la première étape sont toutes fonctionnalisées par adjonction d'une quantité appropriée d'un agent de fonctionnalisation à l'étain susceptible d'introduire en extrémité de chaîne ou en milieu de chaîne une fonction étain. La réaction de fonctionnalisation de l'élastomère diénique est ensuite stoppée par la désactivation des chaînes vivantes restantes.

Le lecteur averti comprendrait que pendant les étapes de préparation des élastomères diéniques fonctionnalisés a) et b), des conditions de mise en oeuvre adéquates doivent être mises en place afin de limiter la formation de l'élastomère diénique c) non fonctionnalisé étain.

L'invention a encore pour objet une composition de caoutchouc renforcée à base d'au moins une charge renforçante et d'une matrice élastomère comprenant au moins un élastomère diénique fonctionnalisé selon l'invention.

La composition peut comprendre de 1 à 100 pce d'élastomère diénique fonctionnalisé selon l'invention.

La composition selon l'invention peut également comprendre au moins un élastomère diénique différent dudit élastomère diénique fonctionnalisé selon l'invention. Ce ou ces élastomères diéniques différents de l'élastomère diénique fonctionnalisé selon l'invention peuvent être choisis parmi les élastomères diéniques conventionnellement utilisés dans les pneus, tel que le caoutchouc naturel ou un élastomère synthétique, ou encore un autre élastomère fonctionnalisé ou étoilé.

On peut utiliser tout type de charge renforçante connue pour ses capacités à renforcer une composition de caoutchouc utilisable pour la fabrication de pneumatiques, par exemple une charge organique renforçante tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375.

On peut aussi utiliser, selon les applications visées, des noirs de séries plus élevées FF, FEF, GPF, SRF, par exemple les noirs N660, N683, N772. Les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂) ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Lorsque la composition selon l'invention est destinée à des bandes de roulement de pneumatique à faible résistance au roulement, la charge inorganique renforçante utilisée, en particulier s'il s'agit de silice, a de préférence une surface BET comprise entre 45 et 400 m²/g, plus préférentiellement comprise entre 60 et 300 m²/g.

De préférence, le taux de charge renforçante dans la composition est compris entre 30 et 150 pce, plus préférentiellement entre 50 et 120 pce. L'optimum est différent selon les applications particulières visées le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation, la charge renforçante comprend majoritairement de la silice, de préférence le taux de noir de carbone présent dans la composition étant compris entre 2 et 20 pce.

Selon un autre mode de réalisation de l'invention, la charge renforçante comprend majoritairement du noir de carbone.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) Z - A - Sₓ - A - Z,

dans laquelle:
- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 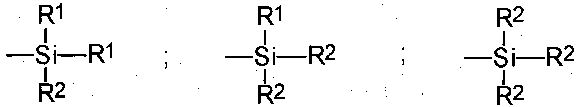 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534, WO2009/062733.

Dans la composition de caoutchouc, la teneur en agent de couplage est préférentiellement comprise entre 0,5 et 12 pce, plus préférentiellement entre 3 et 8 pce.

Typiquement le taux d'agent de couplage représente de 0,5% à 15% en poids par rapport la quantité de charge inorganique.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

La composition selon l'invention peut également comprendre un agent de réticulation chimique.

La réticulation chimique permet la formation de liaisons covalentes entre les chaînes d'élastomère. La réticulation chimique peut se faire au moyen d'un système de vulcanisation ou bien au moyen de composés peroxydes.

Le système de vulcanisation proprement dit est à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

De préférence, on utilise un accélérateur primaire du type sulfénamide.

Lorsque la réticulation chimique est effectuée au moyen d'un ou plusieurs composés peroxydes, le ou lesdits composés peroxydes représentent de 0,01 à 10 pce.

A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde.

La composition de caoutchouc selon l'invention peut comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone (telle que la Cire Ozone C32 ST), anti-ozonants chimiques, anti-oxydants (tel que la 6-paraphénylènediamine), des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, des promoteurs d'adhésion (sels de Cobalt par exemple).

De préférence, la composition selon l'invention comporte, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

La composition selon l'invention peut également contenir, en complément des agents de couplage, des activateurs de couplage de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des α,ω-dihydroxy-polyorganosiloxanes (notamment des α,ω-dihydroxy-polydiméthylsiloxanes), des acides gras comme par exemple l'acide stéarique.

La composition de caoutchouc selon l'invention est fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation chimique.

Selon un mode de réalisation préférentiel de l'invention, tous les constituants de base de la composition comprise dans le pneumatique de l'invention, à l'exception de l'agent de réticulation chimique, à savoir notamment la ou les charges renforçantes, l'agent de couplage le cas échéant, sont incorporés de manière intime, par malaxage, à l'élastomère diénique fonctionnalisé, et aux autres élastomères diéniques le cas échéant, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en oeuvre complémentaires et autres additifs divers, à l'exception de l'agent de réticulation chimique. La durée totale du malaxage, dans cette phase non-productive, est de préférence comprise entre 1 et 15 min. Après refroidissement du mélange ainsi obtenu au cours de la première phase non-productive, on incorpore alors l'agent de réticulation chimique à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule tourisme.

L'invention a encore pour objet un article semi-fini en caoutchouc pour pneumatique, comprenant la composition de caoutchouc, réticulée ou réticulable, selon l'invention. De préférence, ledit article est une bande de roulement.

L'invention a enfin pour objet un pneumatique comportant un article semi-fini selon l'invention.

## Revendications

1. Elastomère diénique fonctionnalisé composé :
a) d'un élastomère diénique fonctionnalisé en extrémité de chaîne ou en milieu de chaîne par une fonction étain, présentant une distribution de masses moléculaires monomodale avant fonctionnalisation et un indice de polydispersité avant fonctionnalisation inférieur ou égal à 1,3,
b) d'un élastomère diénique étoilé avec un composé contenant de l'étain, présentant une distribution de masses moléculaires monomodale avant étoilage et un indice de polydispersité avant étoilage inférieur ou égal à 1,3, et
c) d'un taux inférieur à 15% en poids par rapport au poids total de l'élastomère diénique fonctionnalisé d'un élastomère diénique non fonctionnel étain,
lesdits élastomères diéniques a), b) et c) étant avant fonctionnalisation éventuelle ou étoilage éventuel de même nature.

2. Elastomère selon la revendication 1 **caractérisé en ce qu'**il comprend de 5 à 45%, de préférence de 10 à 30% en poids par rapport au poids total de l'élastomère diénique fonctionnalisé dudit élastomère diénique étoilé b).

3. Elastomère selon la revendication 1 **caractérisé en ce qu'**il comprend un taux strictement supérieur à 0% en poids et inférieur à 10% en poids, de préférence inférieur à 5% en poids par rapport au poids total de l'élastomère diénique fonctionnalisé dudit élastomère diénique non fonctionnel étain c).

4. Elastomère selon l'une quelconque des revendications précédentes **caractérisé en ce que** l'élastomère diénique a) comprend une fonction amine à l'une ou toutes les extrémités de chaînes non fonctionnalisées étain.

5. Elastomère selon l'une quelconque des revendications précédentes **caractérisé en ce que** l'élastomère diénique étoilé b) comprend une fonction amine aux extrémités de chaînes non étoilées étain.

6. Elastomère selon l'une quelconque des revendications précédentes **caractérisé en ce que** l'élastomère diénique non fonctionnel étain c) comprend une fonction amine à l'une des extrémités de chaînes.

7. Elastomère selon l'une quelconque des revendications précédentes **caractérisé en ce que** la fonctionnalisation de l'élastomère a) est obtenue avec un agent de fonctionnalisation mono-halogénoétain ou de couplage di-halogénoétain.

8. Elastomère selon l'une quelconque des revendications précédentes **caractérisé en ce que** l'étoilage de l'élastomère b) est obtenu avec un agent d'étoilage tri ou tétra-halogénoétain.

9. Elastomère selon l'une quelconque des revendications précédentes **caractérisé en ce que** l'élastomère diénique fonctionnalisé a) est un élastomère diénique fonctionnalisé par une fonction étain en milieu de chaîne et l'élastomère diénique fonctionnalisé b) est un l'élastomère diénique étoilé étain à 4 branches.

10. Elastomère selon l'une quelconque des revendications précédentes **caractérisé en ce que** l'élastomère diénique est choisi parmi les polybutadiènes, les copolymères butadiène-styrène, les copolymères butadiène-isoprène, les copolymères isoprène-styrène, les terpolymère butadiène-styrène-isoprène et le polyisoprène de synthèse.

11. Composition de caoutchouc renforcée à base d'au moins une charge renforçante et d'une matrice élastomère, **caractérisée en ce que** la matrice élastomère comprend au moins un élastomère diénique fonctionnalisé tel que défini dans l'une quelconque des revendications 1 à 10.

12. Composition selon la revendication 11 **caractérisé en ce que** la matrice élastomère comprend également au moins un élastomère diénique différent dudit élastomère diénique fonctionnalisé.

13. Composition selon la revendication 11 ou 12 **caractérisé en ce qu'**elle comprend un agent de réticulation chimique.

14. Article semi-fini en caoutchouc pour pneumatique, **caractérisé en ce qu'**il comprend une composition de caoutchouc, réticulable ou réticulée, telle que définie dans l'une quelconque des revendications 11 à 13.

15. Article semi-fini selon la revendication 14 **caractérisé en ce que** le dit article est une bande de roulement.

16. Pneumatique **caractérisé en ce qu'**il comporte un article semi-fini tel que défini dans la revendication 14 ou 15.

## Patentansprüche

1. Funktionalisiertes Dienelastomer aus:
a) einem am Kettenende oder in der Kettenmitte durch eine Zinnfunktion funktionalisierten Dienelastomer, das vor der Funktionalisierung eine monomodale Molekulargewichtsverteilung und vor der Funktionalisierung einen Polydispersitätsindex kleiner gleich 1,3 aufweist,
b) einem mit einer zinnhaltigen Verbindung sternverzweigten Dienelastomer, das vor der Sternverzweigung eine monomodale Molekulargewichtsverteilung und vor der Sternverzweigung einen Polydispersitätsindex kleiner gleich 1,3 aufweist, und
c) einem Gehalt von weniger als 15 Gew.-%, bezogen auf das Gesamtgewicht des funktionalisierten Dienelastomers, eines nicht zinnfunktionellen Dienelastomers,
wobei die Dienelastomere a), b) und c) vor fakultativer Funktionalisierung oder fakultativer Sternverzweigung gleicher Art sind.

2. Elastomer nach Anspruch 1, **dadurch gekennzeichnet, dass** es 5 bis 45 Gew.-%, vorzugsweise 10 bis 30 Gew.-%, bezogen auf das Gesamtgewicht des funktionalisierten Dienelastomers, des sternverzweigten Dienelastomers b) umfasst.

3. Elastomer nach Anspruch 1, **dadurch gekennzeichnet, dass** es einen Gehalt des nicht zinnfunktionellen Dienelastomers c) umfasst, der streng über 0 Gew.-% und unter 10 Gew.-%, vorzugsweise unter 5 Gew.-%, bezogen auf das Gesamtgewicht des funktionalisierten Dienelastomers, liegt.

4. Elastomer nach einem der vorhergehenden Ansprüche, **dadurch gekennzeichnet, dass** das Dienelastomer a) an einem oder allen nicht zinnfunktionalisierten Kettenenden eine Aminfunktion umfasst.

5. Elastomer nach einem der vorhergehenden Ansprüche, **dadurch gekennzeichnet, dass** das sternverzweigte Dienelastomer b) an den nicht über Zinn sternverzweigten Kettenenden eine Aminfunktion umfasst.

6. Elastomer nach einem der vorhergehenden Ansprüche, **dadurch gekennzeichnet, dass** das nicht zinnfunktionelle Dienelastomer c) an einem der Kettenenden eine Aminfunktion umfasst.

7. Elastomer nach einem der vorhergehenden Ansprüche, **dadurch gekennzeichnet, dass** die Funktionalisierung des Elastomers a) mit einem Monohalogenzinn-Funktionalisierungsmittel oder Dihalogenzinn-Kupplungsmittel erhalten wird.

8. Elastomer nach einem der vorhergehenden Ansprüche, **dadurch gekennzeichnet, dass** die Sternverzweigung des Elastomers b) mit einem Tri- oder Tetra-halogenzinn-Sternverzweigungsmittel erhalten wird.

9. Elastomer nach einem der vorhergehenden Ansprüche, **dadurch gekennzeichnet, dass** das funktionalisierte Dienelastomer a) ein durch eine Zinnfunktion in der Kettenmitte funktionalisiertes Dienelastomer ist und das funktionalisierte Dienelastomer b) ein über Zinn sternverzweigtes Dienelastomer mit 4 Armen ist.

10. Elastomer nach einem der vorhergehenden Ansprüche, **dadurch gekennzeichnet, dass** das Dienelastomer aus Polybutadienen, Butadien-Styrol-Copolymeren, Butadien-Isopren-Copolymeren, Isopren-Styrol-Copolymeren, Butadien-Styrol-Isopren-Terpolymeren und synthetischem Polyisopren ausgewählt ist.

11. Verstärkte Kautschukzusammensetzung auf Basis mindestens eines verstärkenden Füllstoffs und einer Elastomermatrix, **dadurch gekennzeichnet, dass** die Elastomermatrix mindestens ein funktionalisiertes Dienelastomer gemäß einem der Ansprüche 1 bis 10 umfasst.

12. Zusammensetzung nach Anspruch 11, **dadurch gekennzeichnet, dass** die Elastomermatrix außerdem mindestens ein Dienelastomer, das von dem funktionalisierten Dienelastomer verschieden ist, umfasst.

13. Zusammensetzung nach Anspruch 11 oder 12, **dadurch gekennzeichnet, dass** sie ein chemisches Vernetzungsmittel umfasst.

14. Kautschuk-Halbzeug für Reifen, **dadurch gekennzeichnet, dass** es eine vernetzbare oder vernetzte Kautschukzusammensetzung gemäß einem der Ansprüche 11 bis 13 umfasst.

15. Halbzeug nach Anspruch 14, **dadurch gekennzeichnet, dass** es sich bei dem Halbzeug um eine Lauffläche handelt.

16. Reifen, **dadurch gekennzeichnet, dass** er ein Halbzeug gemäß einem der Ansprüche 14 oder 15 umfasst.

## Claims

1. Functionalized diene elastomer composed:
a) of a diene elastomer functionalized, at the chain end or in the middle of the chain, by a tin functional group, exhibiting a monomodal distribution of molecular weights before functionalization and a polydispersity index before functionalization of less than or equal to 1.3,
b) of a diene elastomer star-branched with a tin-comprising compound, exhibiting a monomodal distribution of molecular weights before star-branching and a polydispersity index before star-branching of less than or equal to 1.3, and
c) of a content of less than 15% by weight, with respect to the total weight of the functionalized diene elastomer, of a non-tin-functional diene elastomer,
the said diene elastomers a), b) and c) being, before optional functionalization or optional star-branching, the same in nature.

2. Elastomer according to Claim 1, **characterized in that** it comprises from 5% to 45% by weight, preferably from 10% to 30% by weight, with respect to the total weight of the functionalized diene elastomer, of the said star-branched diene elastomer b).

3. Elastomer according to Claim 1, **characterized in that** it comprises a content strictly of greater than 0% by weight and of less than 10% by weight, preferably a content of less than 5% by weight, with respect to the total weight of the functionalized diene elastomer, of the said non-tin-functional diene elastomer c).

4. Elastomer according to any one of the preceding claims, **characterized in that** the diene elastomer a) comprises an amine functional group at one or all of the ends of chains not functionalized by tin.

5. Elastomer according to any one of the preceding claims, **characterized in that** the star-branched diene elastomer b) comprises an amine functional group at the ends of chains not star-branched by tin.

6. Elastomer according to any one of the preceding claims, **characterized in that** the non-tin-functional diene elastomer c) comprises an amine functional group at one of the chain ends.

7. Elastomer according to any one of the preceding claims, **characterized in that** the functionalization of the elastomer a) is obtained with a monohalotin functionalization agent or a dihalotin coupling agent.

8. Elastomer according to any one of the preceding claims, **characterized in that** the star-branching of the elastomer b) is obtained with a tri- or tetrahalotin star-branching agent.

9. Elastomer according to any one of the preceding claims, **characterized in that** the functionalized diene elastomer a) is a diene elastomer functionalized by a tin functional group in the middle of the chain and the functionalized diene elastomer b) is a diene elastomer star-branched by tin having 4 branches.

10. Elastomer according to any one of the preceding claims, **characterized in that** the diene elastomer is chosen from polybutadienes, butadiene-styrene copolymers, butadiene-isoprene copolymers, isoprenestyrene copolymers, butadiene-styrene-isoprene terpolymers and synthetic polyisoprene.

11. Reinforced rubber composition based on at least one reinforcing filler and on an elastomer matrix, **characterized in that** the elastomer matrix comprises at least one functionalized diene elastomer as defined in any one of Claims 1 to 10.

12. Composition according to Claim 11, **characterized in that** the elastomer matrix also comprises at least one diene elastomer other than the said functionalized diene elastomer.

13. Composition according to Claim 11 or 12, **characterized in that** it comprises a chemical crosslinking agent.

14. Semi-finished article made of rubber for a tyre, **characterized in that** it comprises a crosslinkable or crosslinked rubber composition as defined in any one of Claims 11 to 13.

15. Semi-finished article according to Claim 14, **characterized in that** the said article is a tread.

16. Tyre, **characterized in that** it comprises a semi-finished article as defined in Claim 14 or 15.
